# FASCICULE DE BREVET EUROPEEN

(11) **EP 1 695 891 B1**
(45) Date de publication et mention de la délivrance du brevet: **29.07.2009**
(21) Numéro de dépôt: 06115414.2
(22) Date de dépôt: 16.04.2003
(51) Int. Cl.: B62B 7/02

(54) **Voiture d'enfant à châssis à éléments coulissants, et châssis correspondant.**
Kinderwagen mit einem Rahmen mit Gleitelementen und entsprechendes Chassis
Children's vehicle with a frame with sliding elements and corresponding chassis

(30) Priorité: 16.04.2002 FR 0204962; 26.11.2002 FR 0214832
(43) Date de publication de la demande: 30.08.2006
(62) Demande divisionnaire de: 03746350.2
(73) Titulaire: Dorel France SA, 49309 Cholet Cedex (FR)
(72) Inventeur: Zweideck, Bruno, 49300 CHOLET (FR)
(74) Mandataire: Bioret, Ludovic

(56) Documents cités:
- GB-A- 2 204 282
- US-A- 4 412 689

## Description

Le domaine de l'invention est celui de la puériculture. Plus précisément, l'invention concerne les voitures d'enfant, et notamment les mécanismes de pliage pour de telles voitures d'enfants.

On connaît déjà de très nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations le plus facilement possible ;
- solidité et sécurité de l'enfant transporté ;
- simplicité et faible coût de la fabrication.

Parmi les différents types de châssis connus, il existe une catégorie dite à pliage cassé. Selon cette technique, les bras poussoirs se trouvent, en position dépliée, sensiblement dans le prolongement des piétements avant, et basculent par rapport à ces derniers lors du pliage. Le plus souvent, le basculement des bras poussoirs se fait vers le bas, l'extrémité supérieure des bras poussoirs se rapprochant des roues arrière.

On connaît également des techniques selon lesquelles les bras poussoirs basculent vers le haut, de façon que l'extrémité supérieure du bras poussoir se rapproche des roues avant. Une telle technique a notamment été développée par le titulaire de la présente de demande de brevet pour les poussettes dites "tout terrain", qui sont munies de roues de grande taille (par rapport aux poussettes classiques), équipées le plus souvent de pneus gonflables.

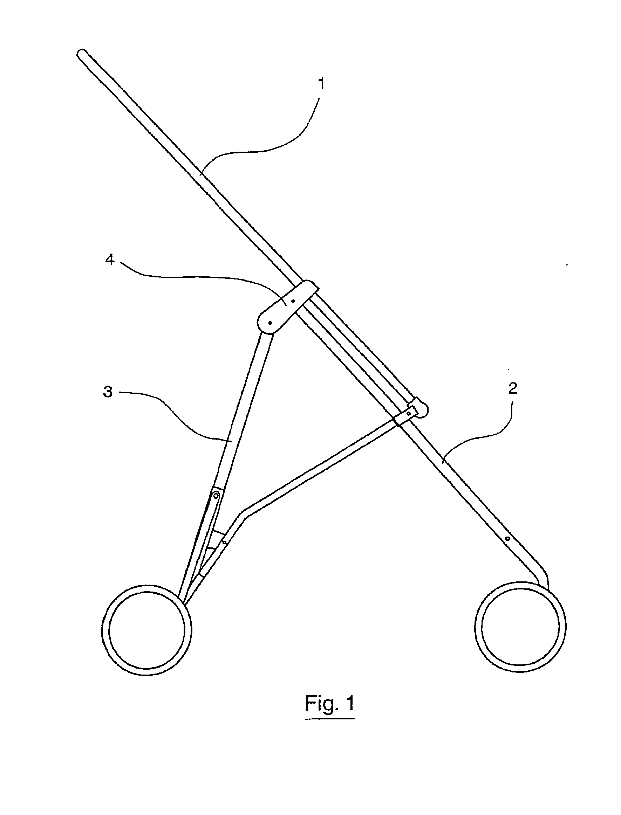

Une autre technique connue est illustrée par la figure 1. Selon cette technique, chaque bras poussoir 1 peut coulisser parallèlement au brancard avant 2 entre une position déployée où le bras poussoir prolonge sensiblement le brancard avant et une position repliée où le bras poussoir et le brancard avant correspondant sont disposés côte à côte. Chaque brancard arrière 3 est articulé au voisinage de son extrémité supérieure sur le brancard avant correspondant.

Ces différentes techniques ont généralement un point commun résidant dans le coulissement des bras poussoirs par rapport aux brancards avant. Ces différents éléments sont réalisés sous la forme de tubes métalliques, et le coulissement repose sur un principe constant, consistant à mettre en oeuvre une pièce de liaison 4 montée fixe sur le brancard avant et présentant une coulisse, espacée du point de fixation du brancard avant, dans laquelle le bras poussoir peut coulisser parallèlement au brancard avant en étant écarté de celui-ci.

Dans GB 2 204 282, le châssis comporte non pas une mais deux pièces de liaison, la première étant montée fixe sur le brancard avant et présentant une coulisse de section tubulaire complémentaire du tube formé par le poussoir de manière à lui permettre de coulisser parallèlement au brancard avant, à distance de celui-ci, la deuxième étant montée fixe sur le poussoir et présentant une coulisse de section tubulaire complémentaire du tube formé par le brancard avant de manière à lui permettre de coulisser parallèlement au poussoir, à distance de celui-ci.

La mise en oeuvre de cet ensemble mécanique a permis de proposer plusieurs techniques de pliage utilisant un tel coulissement, notamment les techniques rappelées précédemment.

Toutefois, ce principe de conception entraîne plusieurs inconvénients.

En effet, le bras poussoir n'est guidé que dans une portion de la pièce de liaison de longueur relativement faible. Avec l'usure des pièces et l'apparition progressive de jeux de plus en plus important entre elles, le coulissement est sujet à des phénomènes de porte-à-faux qui font que le pliage et/ou le dépliage deviennent pénibles à exécuter pour l'utilisateur.

En outre, les pièces de liaison et les bras poussoirs sont sujets à un encrassement, plus ou moins conséquent suivant les chemins empruntés par la voiture d'enfant, qui peut conduire à des phénomènes de blocage du coulissement lors du pliage ou du repliage.

Par ailleurs, lors des manoeuvres de pliage et de dépliage de la voiture, l'utilisateur ou l'enfant transporté peut par mégarde glisser les doigts dans l'espace entre le bras poussoir et le brancard avant, au risque de subir un pincement avec des conséquences plus ou moins graves.

On connaît également la technique présentée dans le document US. 4 412 689, mettant en oeuvre une pièce intermédiaire de liaison formée de deux tubes accolés, permettant un double coulissement "tube dans tube". Le poussoir coulisse dans un premier des tubes de cette pièce de liaison, et le brancard avant coulisse dans le second tube, pour permettre le pliage.

L'invention a notamment pour objectif de pallier ces différents inconvénients de l'art antérieur.

Plus précisément, l'invention a pour objectif de proposer une voiture d'enfant dont le châssis met en oeuvre un ensemble mécanique pour le pliage qui soit plus fiable que les solutions de l'art antérieur.

En ce sens, l'invention a pour objectif de fournir une telle voiture d'enfant dans laquelle le coulissement est amélioré, en termes d'efficacité et de fiabilité, et qui n'est donc pas ou peu sujet aux effets d'un usage intensif (usure, apparition de jeux,...).

L'invention a aussi pour objectif de fournir une telle voiture d'enfant dans laquelle l'ensemble mécanique de coulissement ne subit pas, ou peu, les effets d'un encrassement.

Un autre objectif de l'invention est de fournir une telle voiture d'enfant dont le pliage réduit notablement les risques de pincement de doigts ou d'autres désagréments de ce type.

Encore un autre objectif de l'invention est de fournir une telle voiture pour enfant qui soit simple à fabriquer et à monter.

L'invention a également pour objectif de fournir une telle poussette, dont les moyens techniques de pliage permettant de développer de nouveaux designs, de nouvelles présentations.

Ces objectifs, ainsi que d'autres qui apparaîtront par la suite, sont atteints à l'aide d'une voiture d'enfant telle que définie par la revendication 1, ou un châssis selon la revendication 8.

Préférentiellement, au moins une desdits assemblages est formé par un desdits poussoirs et un desdits brancards avant.

On obtient ainsi un guidage du coulissement amélioré par rapport aux solutions de l'art antérieur, grâce au fait que le bras poussoir et le brancard coulissent l'un par rapport à l'autre sans espace entre eux, l'un formant rail et l'autre coulisseau.

On obtient donc une solution fiable de façon pérenne.

En outre, le risque de pincement de doigts entre le bras poussoir et le brancard avant est éliminé puisque qu'aucun espace n'apparaît entre ces deux éléments.

On note que l'invention peut s'appliquer aux voitures d'enfant du type à quatre roues (comprenant un brancard avant de chaque côté de la voiture).

Selon une solution avantageuse, ledit brancard arrière est articulé par rapport audit brancard avant, et présente une surface de contact avec ledit brancard avant définie de façon à venir s'inscrire dans une surface complémentaire définie dans ledit brancard avant.

Préférentiellement, lorsque ladite voiture d'enfant est pliée, ledit poussoir, ledit brancard avant et ledit brancard arrière, forment un ensemble jointif.

On obtient de cette façon un ensemble particulièrement ergonomique et esthétique, en particulier à l'état replié de la voiture pour enfant.

Avantageusement, ledit ensemble jointif présente une section homogène et compacte.

Les différents éléments composant le châssis forment, dans la position repliée de la voiture d'enfant, un ensemble compact et rigide particulièrement appréciable pour être déplacé et/ou soulevé en vue par exemple de son chargement dans le coffre d'un véhicule.

Selon un mode de réalisation, au moins une pièce réalisée en un matériau à faible coefficient de frottement est clippée sur ledit rail.

Dans ce cas, on améliore ainsi de façon notable la capacité des pièces à coulisser l'une contre l'autre.

Ladite pièce réalisée en un matériau à faible coefficient de frottement est un patin.

Ledit patin est avantageusement fluorescent (au moins pour ses parties visibles), ce qui permet de visualiser la voiture d'enfant plus facilement dans la nuit. Placé en cet endroit, un tel organe fluorescent aura une meilleure tenue dans le temps que les bandes adhésives fluorescentes ou autres moyens similaires rapportés sur les voitures d'enfant et ayant tendance notamment à se décoller ou se détériorer sous l'effet de frottements divers.

Préférentiellement, des moyens de nettoyage de la zone de coulissement sont prévus, sur au moins une desdites pièces coulissantes. Dans ce cas, lesdits moyens de nettoyage comprennent avantageusement au moins un balai racleur monté à l'extrémité dudit poussoir.

De cette façon, on limite considérablement les possibilités d'encrassement du mécanisme de coulissement, ou à tout le moins, on limite les effets indésirables d'un tel encrassement, celui-ci étant éliminé au fur et à mesure des pliages/dépliages de la voiture d'enfant.

Selon une solution avantageuse, ledit poussoir et ledit brancard avant sont reliés par une première pièce de liaison tandis que ledit brancard avant et ledit brancard arrière sont reliés par une deuxième pièce de liaison, lesdites première et deuxième pièces de liaison venant en butée l'une contre l'autre en position dépliée de ladite voiture.

Préférentiellement, ledit poussoir, ledit brancard avant et/ou ledit brancard arrière sont réalisés à partir d'éléments profilés. Dans ce cas, lesdits éléments profilés sont réalisés dans un des matériaux appartenant au groupe comprenant :
- l'aluminium ;
- l'aluminium anodisé ;
- l'aluminium céramisé ;
- les matériaux composites ;
- les matériaux extrudés ;
- les matériaux pultrudés ;
- le PTFE ;
- le PE ;
- le silicone ;
- le bois.

De façon avantageuse, les profilés sont réalisés dans des matériaux métalliques extrudés, et en particulier en aluminium qui regroupe de nombreux avantages, et notamment :
- sa densité, qui permet d'obtenir des pièces légères ;
- son rapport qualité/prix ;
- son état de surface qui ne nécessite pas obligatoirement de traitement complémentaire ;
- son aptitude à être travailler à l'aide de techniques simples et courantes (rivetage, soudage...) comparé à d'autres matériaux tels que par exemple les composites.

Avantageusement, l'intérieur d'au moins un desdits éléments profilés est adapté pour recevoir au moins un équipement spécifique.

On obtient ainsi la possibilité d'introduire, en les masquant, des éléments ou des mécanismes à l'intérieur des profilés, tels que par exemple, des chemins de câble.

Préférentiellement, au moins un desdits assemblages est formé par deux pièces appartenant au groupe comprenant :
- le piètement avant ;
- le piètement arrière ;
- le guidon.

Selon une autre caractéristique, la voiture d'enfant comprend deux ensembles coulissants similaires, comprenant chacun un brancard avant et un poussoir, respectivement pour chacun des côtés de ladite voiture d'enfant.

Selon un premier mode de réalisation, la voiture d'enfant comprend deux brancards avant symétriques répartis de chaque côté du châssis.

Selon encore une autre caractéristique, ledit ou lesdits brancards avant sont articulés par rapport audit ou auxdits brancards arrière. Dans ce cas, ledit ou lesdits brancards avant et arrière présentent préférentiellement au moins partiellement des formes complémentaires susceptibles de s'inscrire l'une dans l'autre en position repliée de ladite voiture.

L'invention concerne également un châssis pliant pour voiture d'enfant telle que décrite précédemment.

D'autres caractéristiques et avantages de l'invention apparaîtront plus clairement à la lecture de la description suivante d'un mode de réalisation donné à titre d'exemple illustratif et non limitatif et des dessins parmi lesquels :
- la figure 1, déjà commentée en préambule, illustre une voiture d'enfant selon l'art antérieur ;
- les figures 2A et 2B représentent une voiture d'enfant selon l'invention, respectivement en position repliée et en position dépliée ;
- les figures 3 et 4 sont des vues en coupe, respectivement de dessus et en perspective, d'un ensemble jointif, non couvert par les revendications formé par le brancard avant, le brancard arrière et le bras poussoir de la voiture d'enfant des figures 2A et 2B ;
- la figure 5 est une vue en coupe d'un mode de réalisation des moyens favorisant le coulissement du bras poussoir par rapport au brancard avant selon l'invention;

En référence à la figure 1, on rappelle que les voitures d'enfant comprenant un châssis pliant comprennent de façon classique et quasi constante, selon l'art antérieur, un mécanisme de coulissement du bras poussoir 1, par rapport au brancard 2 selon lequel le bras poussoir coulisse parallèlement au brancard avant et à distance de celui-ci, en étant guidé par une pièce de liaison 4.

L'invention propose une approche fondamentalement nouvelle et non évidente, par rapport à cet art antérieur.

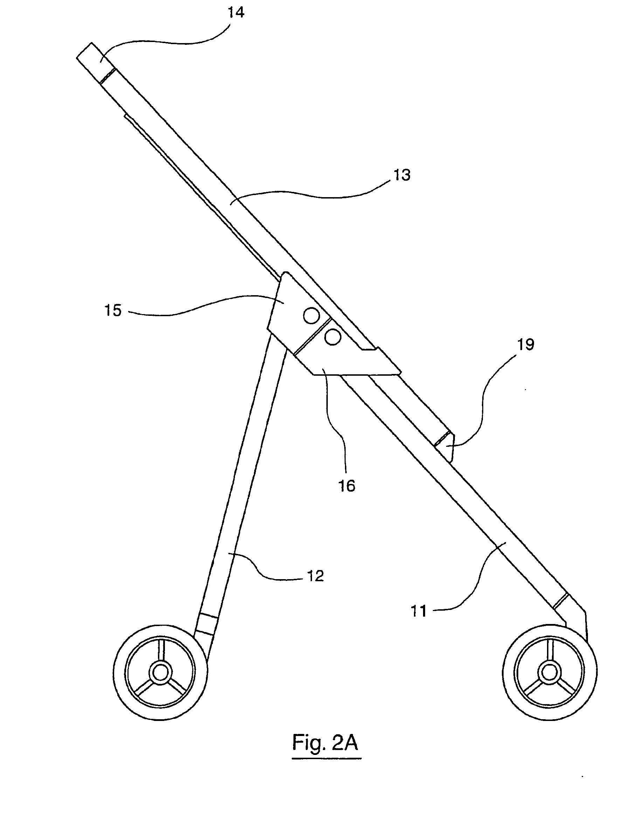

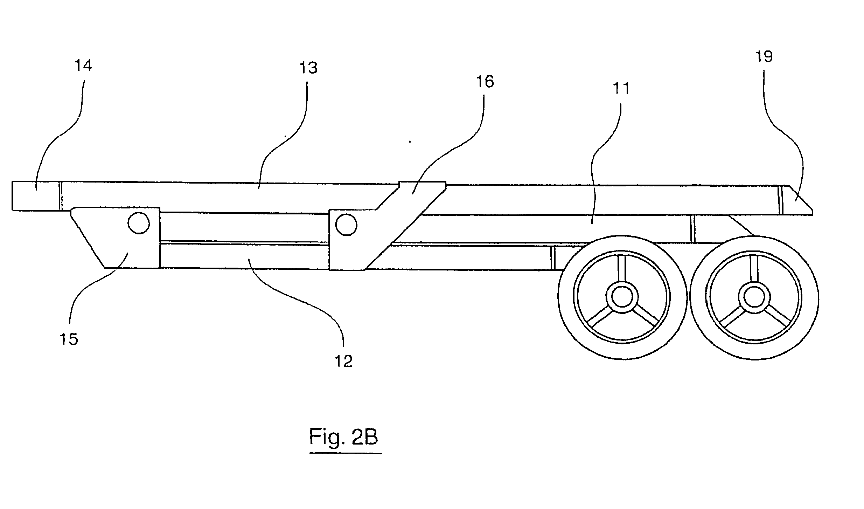

Tel qu'illustré par les figures 2A et 2B, une voiture d'enfant à châssis pliant comprend, de chaque côté de la voiture, un brancard avant 11 portant au moins une roue avant, un brancard arrière 12 portant une ou deux roues (ou plus) arrières, et un poussoir 13 coopérant avec une poignée de guidage 14.

On peut noter, sur ces figures, que la solution de l'invention permet de réaliser une présentation tout à fait originale, esthétique et ergonomique, limitant en outre les risques de pincement.

Le poussoir 13 et le brancard avant 11 sont en effet solidarisés l'un à l'autre et forment un assemblage de deux pièces coulissant l'une par rapport à l'autre, sans espace entre elles.

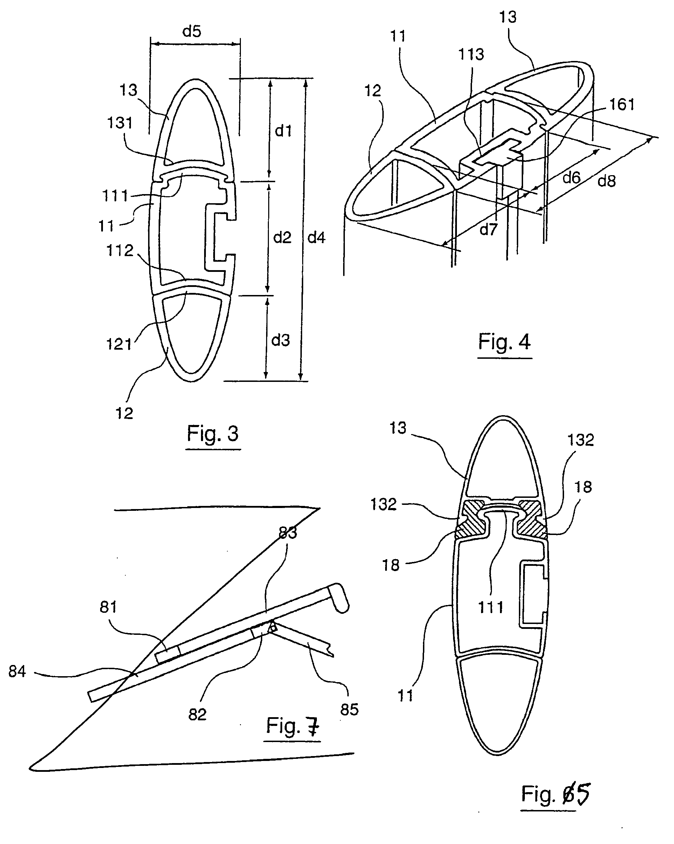

Pour ce faire, tel que cela apparaît plus clairement sur les figures 3 et 4, le poussoir 13 présente un rail 131 tandis que le brancard avant 11 présente un coulisseau 111 conformé pour coulisser dans le rail 131.

On note que, selon un autre mode de réalisation envisageable, le rail pourrait être porté par le brancard avant tandis que le coulisseau serait dans ce cas porté par le poussoir. En outre, il est également concevable d'envisager sans sortir du cadre de l'invention, plusieurs rails et/ou coulisseaux sur chacune des pièces, permettant le coulissement sans espace entre les pièces.

Selon le mode de réalisation présenté, le brancard avant 11, le brancard 12 arrière et le poussoir 13 sont réalisés à partir d'éléments profilés en aluminium. Ces éléments profilés pourront, dans d'autres modes de réalisation, être réalisés en aluminium anodisé ou céramisé, en matériaux composites, en PTFE ou en PE, en bois, les profilés pouvant être conformés par différentes techniques, telles que des procédés d'extrusion ou de pultrusion pour les matériaux qui s'y prêtent.

Par ailleurs, le brancard arrière 12 est articulé par rapport au brancard avant 11, à l'aide d'une pièce de liaison 15 (figures 2A et 2B), par exemple en matière plastique.

Ainsi, la voiture d'enfant selon l'invention peut être dépliée (figure 2A), et pliée (figure 2B).

Dans le mode de réalisation illustré, une pièce de liaison complémentaire 16 dont une portion 161 (figure 4) pénètre un évidement 113 de forme complémentaire prévu dans le brancard avant 11. Cette pièce de liaison complémentaire 16 est montée sur le brancard avant 11 de telle sorte qu'elle vienne en butée contre la pièce de liaison 15 lorsque la voiture d'enfant est dépliée. La pièce 16 peut être réalisée dans le même matériau que la pièce 15, pour donner une même impression d'ensemble, notamment en position dépliée.

On note toutefois que le guidage en coulissement du brancard avant et du poussoir, ainsi que le maintien de ceux-ci dans leur position respective, n'est pas assurée par cette pièce 16, mais du seul fait de la forme (rail/coulisseau) qui leur est donnée selon l'invention. Par conséquent, la pièce 16 peut ne pas apparaître dans d'autres modes de réalisation.

Dans la position pliée de la voiture d'enfant, le poussoir 13, le brancard avant 11 et le brancard arrière 12 forment un ensemble jointif qui présente une section homogène et compacte, de forme elliptique selon le présent mode de réalisation. Bien sûr, d'autres sections peuvent être envisagées, et cette section peut varier.

Cet ensemble jointif est obtenu, lorsque la voiture est pliée, grâce notamment au fait que le brancard arrière 12 présente une surface de contact 121 définie de façon à venir s'inscrire dans une surface complémentaire 112 du brancard avant 11.

L'ensemble jointif est par ailleurs, et de façon complémentaire, formé par le poussoir 13 et le brancard avant 11 monté à coulissement l'un dans l'autre.

A titre indicatif, un tel ensemble jointif, et les pièces qui le composent présentent, dans le mode de réalisation illustré en figure, les dimensions suivantes :
- d₁ = 37 mm ;
- d₂ = 36 mm ;
- d₃ = 32 mm ;
- d₄ = 105 mm ;
- d₅ = 32 mm ;
- d₆ = 36 mm ;
- d₇ = 37 mm ;
- d₈ = 43 mm.

Toujours à titre indicatif, les longueurs du poussoir, du brancard avant et du brancard arrière sont ici respectivement de 970 mm, 700 mm et 550 mm.

On note que la forme des surfaces complémentaires 112 et 121 est incurvée selon le présent mode de réalisation, mais pourrait présenter une autre forme (carrée, trapézoïdale...) selon d'autres modes de réalisation envisageables.

En outre, la section elliptique de l'ensemble jointif est une forme avantageuse, ergonomiquement et esthétiquement, permise par le principe de l'invention. De nombreuses autres sections peuvent bien sûr être envisagées, en fonction des exigences techniques ou esthétiques.

Selon un mode de réalisation illustré par la figure 5, le coulissement est assuré par l'intermédiaire de patins 18 en téflon (ou alternativement en plastique, en polymère, en polyoléfine ou tout autre matériau ayant un faible coefficient de frottement).

Ces patins 18 sont conformés pour être retenus sur le poussoir 13 par des moyens de clippage 132 tandis qu'ils épousent partiellement la forme du coulisseau 111 du brancard avant 11. On note que les patins peuvent être simplement enfilés sur le poussoir.

Préférentiellement, ces patins (ou à tout le moins leurs parties visibles) sont réalisés dans un matériau fluorescent (ou contenant des pigments fluorescents, ou recouvert d'un revêtement fluorescent) ou réfléchissant pour permettre un meilleur repérage de la voiture d'enfant dans la nuit ou la pénombre.

Par ailleurs, de façon à éliminer l'encrassement susceptible d'apparaître sur les moyens de coulissement, ou à tout le moins pour limiter les effets de cet encrassement, des moyens de nettoyage de la zone de coulissement sont prévus.

Ces moyens de nettoyage comprennent, selon le présent mode de réalisation, un balai racleur monté à l'extrémité inférieure 19 du poussoir 13.

On comprend que ce balai racleur présente une section qui épouse celle du coulisseau 111 de façon à chasser de celle-ci tout dépôt de poussière, ou autres, susceptible de gêner le coulissement du poussoir par rapport au brancard avant.

En complément, ou alternativement, un tel balai peut être monté à l'autre extrémité, par exemple dans la pièce 15.

On notera que l'extrémité inférieure 19 joue également le rôle de pied, en position pliée et dressée (figure 2B).

Même si l'invention est limitée par les revendications, elle ne se limite bien sûr pas au mode de réalisation décrit ci-dessus, mais concerne au contraire toutes les voitures d'enfant mettant en oeuvre de tels moyens de coulissement.

Ainsi, le châssis peut être construit selon diverses approches connues, et la cinématique de pliage/dépliage peut être adaptée en conséquence.

On note également que cette approche s'applique avantageusement aux voitures d'enfant transformables en porte-bébé, que l'on peut prendre sur le dos d'un adulte.

## Revendications

1. Voiture d'enfant à châssis pliant, ledit châssis pliant comprenant deux brancards avant (11), portant au moins une roue avant, deux brancards arrière (12), portant au moins une roue arrière, et deux poussoirs (13), coopérant avec une poignée de guidage (14), ledit châssis comprenant deux assemblages de deux pièces, à savoir un brancard avant (11) et un poussoir (13), une première desdites pièces présentant au moins un rail et portant au moins un patin (18) réalisé en un matériau à faible coefficient de frottement, ledit patin étant conformé pour :
- être retenu sur ladite première pièce,
- épouser partiellement la forme d'un coulisseau défini sur la seconde pièce dudit assemblage, et
- assurer un guidage en coulissement dudit coulisseau,
de façon que ladite première pièce, portant ledit patin, forme avec ladite seconde pièce un assemblage de deux pièces coulissant l'une par rapport à l'autre sans qu'aucun espace n'apparaisse entre elles.

2. Voiture d'enfant selon la revendication 1, **caractérisée en ce que** ledit poussoir (13), ledit brancard avant (11) et/ou ledit brancard arrière (12) sont réalisés à partir d'éléments profilés.

3. Voiture d'enfant selon la revendication 2, **caractérisée en ce que** lesdits éléments profilés sont réalisés dans un des matériaux appartenant au groupe comprenant :
- l'aluminium ;
- l'aluminium anodisé ;
- l'aluminium céramisé ;
- les matériaux composites ;
- les matériaux extrudés ;
- les matériaux pultrudés ;
- le PTFE ;
- le PE ;
- le silicone ;
- le bois.

4. Voiture d'enfant selon l'une quelconque des revendications 2 et 3, **caractérisée en ce que** l'intérieur d'au moins un desdits éléments profilés est adapté pour recevoir au moins un équipement spécifique.

5. Voiture d'enfant selon l'une quelconque des revendications 1 à 4, **caractérisée en ce que** ledit ou lesdits brancards avant sont articulés par rapport audit ou auxdits brancards arrière.

6. Voiture d'enfant selon la revendication 5, **caractérisé en ce que** ledit ou lesdits brancards avant et arrière présentent au moins partiellement des formes complémentaires susceptibles de s'inscrire l'une dans l'autre en position repliée de ladite voiture.

7. Voiture d'enfant selon l'une quelconque des revendications 1 à 6, **caractérisé en ce que** lesdites pièces présentent plusieurs rails et/ou plusieurs coulisseaux.

8. Châssis pliant pour voiture d'enfant selon l'une quelconque des revendications 1 à 7.

## Claims

1. Children's vehicle with a folding frame, said folding frame comprising two front shafts (11), bearing at least one front wheel, two rear shafts (12) bearing at least one rear wheel, and two pushing elements (13) cooperating with a guide handle (14),
said frame comprising two assemblies of two parts, namely a front shaft (11) and a pushing element (13), a first of said parts having at least one rail and bearing at least one runner (18) made from a material having a low coefficient of friction, said runner being designed:
- to be retained on said first part,
- to conform partially to the shape of a slide defined on the second part of said assembly, and
- to ensure the sliding guidance of said slide,
so that said first part, bearing said runner, forms with said second part an assembly of two parts which slide relative to one another without any space appearing therebetween.

2. Children's vehicle according to Claim 1, **characterised in that** said pushing element (13), said front shaft (11) and/or said rear shaft (12) are made from profiled elements.

3. Children's vehicle according to Claim 2, **characterised in that** said profiled elements are made from one of the materials belonging to the group comprising:
- aluminium;
- anodised aluminium;
- ceramised aluminium;
- composite materials;
- extruded materials;
- pultruded materials;
- PTFE;
- PE;
- silicone;
- wood.

4. Children's vehicle according to any one of Claims 2 and 3, **characterised in that** the inside of at least one of said profiled elements is designed to receive at least one specific piece of equipment.

5. Children's vehicle according to any one of Claims 1 to 4, **characterised in that** said front shaft(s) are articulated relative to said rear shaft(s).

6. Children's vehicle according to Claim 5, **characterised in that** said front and rear shaft(s) have, at least partially, shapes which are complementary and capable of fitting into one another in the folded position of said vehicle.

7. Children's vehicle according to any one of Claims 1 to 6, **characterised in that** said parts have a plurality of rails and/or a plurality of slides.

8. Folding frame for children's vehicle according to any one of Claims 1 to 7.

## Patentansprüche

1. Kinderwagen mit zusammenklappbarem Gestell, wobei das zusammenklappbare Gestell zwei vordere Streben (11), die mindestens ein Vorderrad tragen, zwei hintere Streben (12), die mindestens ein Hinterrad tragen, und zwei Schubstangen (13), die mit einem Führungsgriff (14) zusammenwirken, umfasst,
wobei dieses Gestell zwei Anordnungen aus zwei Teilen, d.h. einer vorderen Strebe (11) und einer Schubstange (13), umfasst, wobei ein erstes dieser Teile mindestens eine Schiene aufweist und mindestens einen Gleitschuh (18) trägt, der aus einem Werkstoff mit geringem Reibbeiwert besteht, wobei der Gleitschuh dazu ausgebildet ist, dass er:
- an dem ersten Teil gehalten wird,
- sich teilweise an die Form eines Gleitstücks anpasst, das am zweiten Teil dieser Anordnung ausgebildet ist, und
- eine Schiebeführung dieses Gleitstücks gewährleistet,
so dass das erste Teil, das den Gleitschuh trägt, mit dem zweiten Teil eine Anordnung aus zwei Teilen bildet, die zueinander verschiebbar sind, ohne dass ein Zwischenraum zwischen ihnen auftritt.

2. Kinderwagen nach Anspruch 1, **dadurch gekennzeichnet, dass** die Schubstange (13), die vordere Strebe (11) und/oder die hintere Strebe (12) aus Profilelementen bestehen.

3. Kinderwagen nach Anspruch 2, **dadurch gekennzeichnet, dass** die Profilelemente aus einem der Werkstoffe bestehen, die der folgenden Gruppe angehören:
- Aluminium;
- eloxiertes Aluminium;
- keramikbeschichtetes Aluminium;
- Verbundstoffe;
- extrudierte Werkstoffe;
- pultrudierte Werkstoffe;
- PTFE;
- PE;
- Silikon;
- Holz.

4. Kinderwagen nach einem beliebigen der Ansprüche 2 und 3, **dadurch gekennzeichnet, dass** der Innenraum mindestens eines dieser Profilelemente zur Aufnahme von mindestens einer spezifischen Ausrüstung geeignet ist.

5. Kinderwagen nach einem beliebigen der Ansprüche 1 bis 4, **dadurch gekennzeichnet, dass** die vordere(n) Strebe(n) in Bezug auf die hintere(n) Strebe(n) gelenkig ist(sind).

6. Kinderwagen nach Anspruch 5, **dadurch gekennzeichnet, dass** die vordere(n) und hintere(n) Strebe(n) zumindest teilweise komplementäre Formen aufweisen, die in der zusammengeklappten Position des Kinderwagens genau aneinander gelegt werden können.

7. Kinderwagen nach einem beliebigen der Ansprüche 1 bis 6, **dadurch gekennzeichnet, dass** die Teile mehrere Schienen und/oder mehrere Gleitstücke aufweisen.

8. Zusammenklappbares Gestell für Kinderwagen nach einem der beliebigen Ansprüche 1 bis 7.
